# FASCICULE DE BREVET EUROPEEN

(11) **EP 1 570 932 B1**
(45) Date de publication et mention de la délivrance du brevet: **10.08.2011**
(21) Numéro de dépôt: 05300053.5
(22) Date de dépôt: 24.01.2005
(51) Int. Cl.: B23B 31/107

(54) **Foret pour machine et dispositif d'emmanchement pour celui-ci**
Bohrer für Maschinen und Spannvorrichtung für einen solchen Bohrer
Drill for machine and holding device for the same

(30) Priorité: 29.01.2004 FR 0401026
(43) Date de publication de la demande: 07.09.2005
(73) Titulaire: M.B.H. Developpement, 42120 St. Vincent de Boisset (FR)
(72) Inventeur: Bottazzi, Marc, 42120 Saint Vincent de Boisset (FR)
(74) Mandataire: Dupuis, François

(56) Documents cités:
- EP-A- 1 215 000
- EP-A- 1 238 732
- EP-A- 1 338 377
- WO-A-96/08343
- CH-A- 371 939
- DE-U1- 20 016 941
- FR-A- 2 857 285
- GB-A- 658 047
- GB-A- 191 410 224
- US-A- 3 251 605
- US-A- 4 273 344
- US-A- 4 701 083
- US-A- 5 674 031

## Description

L'invention se rattache au secteur technique de l'outillage avec intégration de forets et porte-forets.

Selon l'art antérieur bien connu, les forets sont maintenus entre les mors d'une perceuse, et machines électroportatives en général, lesquels sont serrés à l'aide d'une clé. Cela entraîne certaines manipulations par l'utilisateur, alors qu'il n'est pas toujours nécessaire que le foret soit toujours bien maintenu, cela dépendant des applications.

Il existe des systèmes d'emmanchement rapide de porte-outils tels que décrits dans les brevets CH 371.939, US 4.273.344, EP 1.238.732.

On connait par WO96/08343 A1 un foret monobloc pour machine selon le préambule de la revendication 1 incluant des parties successives formant tête de forage, siège conique de centrage, et récepteur de billes de verrouillage, le corps présentant une pluralité de cannelures ou rainures coopérant avec des formes complémentaires complexes établies sur le manchon récepteur.

Ainsi, le Demandeur a imaginé une solution simple et rapide pour permettre le montage ou démontage rapide du foret, en fonction des besoins considérés.

Selon une première caractéristique le foret selon l'invention est défini par la revendication 1.

Selon une autre caractéristique la combinaison d'un foret selon la revendication 1 et un dispositif d'emmanchement est défini par la revendication 2.

Ces caractéristiques et d'autres encore ressortiront bien de la suite de la description.

Pour fixer l'objet de l'invention illustré d'une manière non limitative aux figures des dessins où :

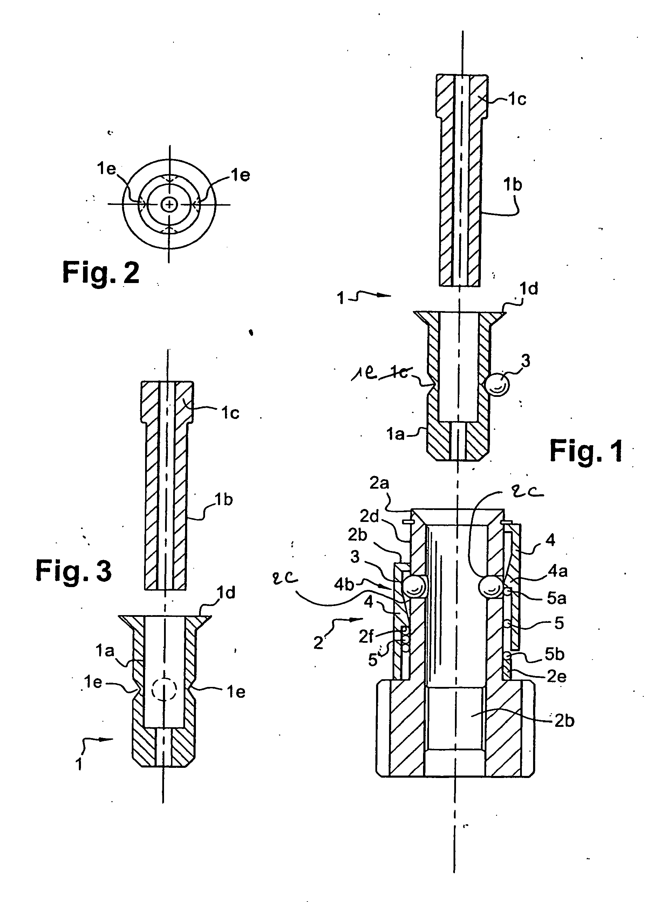

- La figure 1 est une vue de côté et en coupe d'un foret selon l'invention.
- La figure 2 est une vue de face selon la figure 1.
- La figure 3 est une vue d'une mise en oeuvre du foret.

Afin de rendre plus concret l'objet de l'invention, on le décrit maintenant d'une manière non limitative illustrée aux figures des dessins.

Le foret est représenté dans son ensemble par (1) et est constitué monobloc et vient s'adapter, se centrer et se verrouiller en position dans un manchon récepteur (2). Le foret présente un corps cylindrique (1a), pouvant être creux intérieurement, et se prolongeant par une partie tubulaire (1b) dont l'extrémité constitue la partie active de forage (1c). Celle-ci peut être du type de celle décrite dans la publication FR 2 857 285 A1 de la demande de brevet FR 03 08749. Elle peut être diamantée. En outre, le foret présente une tête (1d) conique se positionnant dans un logement (2a) approprié sur la face avant d'un dispositif d'emmanchement rapide.

Extérieurement, le foret présente, sur la périphérie de son corps, des empreintes (1e), par exemple 2, 3 et de préférence 4, établies dans l'épaisseur et formant logement de billes (3) intégrées dans le dispositif d'emmanchement rapide. Celui-ci est constitué avantageusement par le manchon (2) et une bague coulissante (4) entre lesquels les billes sont disposées. Les empreintes (1e) ont une configuration conique. Pour assurer le verrouillage en position du foret sur le manchon, ce dernier est agencé à son tour avec une cavité réceptrice (2b) du foret et présente, sur sa périphérie, des ouvertures (2c) en nombre correspondant au nombre d'empreintes (1e) du foret. Ces ouvertures permettent le passage des billes (3), tandis que la bague (4) est rapportée sur la portée extérieure (2d) du manchon (2) en étant susceptible d'un coulissement axial limité et contrôlé à l'encontre d'un moyen de rappel (5) du type ressort monté autour de ladite portée extérieure. A cet effet, le manchon comprend entre la portée réceptrice des ouvertures et billes, une seconde portée (2e) sur laquelle peut se déplacer temporairement la bague (4). Le ressort de rappel (5) est maintenu par ses extrémités (5a-5b) qui prennent successivement appui sur le chant (4a) interne droit adjacent à la rampe (4b) de la bague (4) et sur le chant (2f) de jonction desdites portées (2d-2e) du manchon. La bague présente par ailleurs une rampe (4b) inclinée intérieurement en contact avec les billes (3). Le déplacement de la bague à l'encontre du ressort permet de libérer radialement les billes des empreintes (1c) et autorise le coulissement et l'engagement ou désengagement du foret dans le manchon.

Le foret est monobloc. Il peut être réalisé en deux parties avec le corps, d'une part, et la partie tubulaire dont l'extrémité reçoit la partie active, l'ensemble étant solidarisé par soudure ultra-sons ou similaires. Le foret, selon l'invention, est adapté pour le passage de tout fluide de lubrification, en étant creux intérieurement. La partie active du foret est quelconque et, par exemple, celle décrite dans le brevet précité.

Cette solution est simple, pratique et rapide. Le manchon s'adapte sur l'outillage de toute manière appropriée.

## Revendications

1. Foret (1) adaptable sur machine du type comprenant un corps cylindrique (1a) avec une partie active de forage (1c), une partie conique (1d) formant siège pour se positionner sur un manchon support (3) et une partie à extrémité (1e) susceptible de recevoir des billes de verrouillage (3), **caractérisé en ce qu'**il présente le corps (1a) cylindrique, creux intérieurement, avec un prolongement tubulaire (1b) dont l'extrémité constitue la partie active du foret, l'ensemble étant monobloc, le foret présentant une tête (1d) conique, et, à l'opposé, sur la périphérie extérieure dudit corps, et dans son épaisseur, des empreintes (1e) coniques formant logement, susceptibles de recevoir des billes (3) disposées et interposées dans un dispositif d'emmanchement rapide escamotable pour assurer le verrouillage et déverrouillage dudit foret.

2. Combinaison d'un foret, selon la revendication 1, et d'un dispositif d'emmanchement, **caractérisés en ce que** le dispositif d'emmanchement rapide comprend un manchon récepteur (2) du foret et une bague escamotable (4) à l'encontre d'un moyen élastique de rappel (5), les billes étant sollicitées en déplacement lors du déplacement de la bague par rapport au manchon en verrouillant ou en déverrouillant le foret, et **en ce que** la tête (1d) se positionne dans un logement (2a) formé sur la face avant du manchon récepteur (2), et **en ce que** le manchon (2) présente une cavité réceptrice (2b) du foret, sur sa périphérie des ouvertures (2c) en nombre correspondant au nombre d'empreintes (1c) du foret, lesdites ouvertures étant aménagées sur une première portée extérieure (2d) du manchon, et **en ce que** ledit manchon comprend une seconde portée (2 e) sur laquelle peut se déplacer la bague (4), la bague présentant une rampe (4b) inclinée intérieurement en contact avec les billes (3),
et **en ce que** le ressort de rappel (5) monté autour de la portée extérieure (2d) du manchon est maintenu par ses extrémités qui prennent appui sur le chant (4a) interne droit adjacent à une rampe (4b) d'appui sur les billes et sur le chant de jonction (2f) desdites portées (2d-2e).

## Claims

1. Drill bit (1) that can be fitted on a machine of the type comprising a cylindrical body (1a) with an active drilling portion (1c), a tapered portion (1d) forming a seat that is positioned on a support sleeve (2) and a portion with an end (2a) capable of accommodating detent balls (3), **characterised in that** it has an internally hollow cylindrical body (1a) with a tubular extension (1b), whereof the end constitutes the active part of the drill bit, this assembly being of one-piece construction, the drill having a tapered tip (1d) and, opposite it, on the outer periphery of said body and in its thickness, conical recesses (1e) capable of receiving detent balls (3) arranged and interposed in a quick-release force fit device in order to ensure locking and unlocking of said drill bit.

2. Combination of a drill bit as claimed in claim 1 and a force fit device, **characterised in that** the quick-release force fit device comprises a sleeve (2) for receiving the drill bit and a ring (4) that can be retracted in opposition to an elastic return means (5) with the balls being moved during displacement of the ring relative to the sleeve and locking or releasing the drill,
and **in that** tip (1d) positions itself in a recess (2a) formed on the front face of the receiving sleeve (2),
and **in that** sleeve (2) has a cavity (2b) for receiving the drill bit, the number of openings (2c) on its periphery corresponding to the number of recesses (1c) of the drill bit, said openings being provided on a first external bearing surface (2d) of the sleeve,
and **in that** said sleeve comprises a second bearing surface (2e) on which ring (4) can move, with the ring having an inwardly sloping ramp (4b) that is in contact with balls (3),
and **in that** return spring (5) mounted around external bearing surface (2d) of the sleeve is secured by its ends which rest on straight internal edge (4a) adjacent to a ramp (4b) that rests on the balls, and on junction edge (2f) of said bearing surfaces (2d-2e).

## Patentansprüche

1. Auf eine Maschine anpassbarer Bohrer (1) nach Art derjenigen mit einem zylindrischen Körper (1a) mit einem aktiven Bohrteil (1c), einem einen Sitz bildenden konischen Teil (1d) zur Positionierung auf einer Haltemuffe (2), und einem Teil mit Endstück (2a), das geeignet ist, Verriegelungskugeln (3) aufzunehmen, **dadurch gekennzeichnet, dass** der innen hohle zylindrische Körper (1a) eine rohrförmige Verlängerung (1b) aufweist, deren Ende den aktiven Teil des Bohrers bildet, wobei das Ganze als Monoblock ausgebildet ist und der Bohrer einen konischen Kopf (1d) und auf der entgegengesetzten Seite am äußeren Rand des besagten Körpers und in seiner Materialdicke als Lager dienende konische Vertiefungen (1e) aufweist, die zur Aufnahme von Kugeln (3) geeignet sind, die in einer einziehbaren Schnellsteckvorrichtung für die Verriegelung und Entriegelung des Bohrers angeordnet und eingefügt sind.

2. Kombination eines Bohrers nach Anspruch 1 und einer Steckvorrichtung, **dadurch gekennzeichnet, dass** die Schnellsteckvorrichtung eine Aufnahmemuffe (2) für den Bohrer und einen an einer elastischen Rückholeinrichtung (5) einziehbaren Ring (4) aufweist, wobei die Kugeln bei der Verschiebung des Rings gegenüber der Muffe auf Bewegung beansprucht werden und dabei den Bohrer verriegeln bzw. entriegeln,
und **dadurch gekennzeichnet, dass** der Kopf (1d) in einem auf der Vorderseite der Aufnahmemuffe (2) ausgebildeten Lager (2a) positioniert wird,
und dass die Muffe (2) einen Hohlraum (2b) für die Aufnahme des Bohrers und an ihrem Rand zahlenmäßig der Anzahl der Vertiefungen (1c) des Bohrers entsprechende Öffnungen (2c) aufweist, wobei die besagten Öffnungen auf einer ersten äußeren Auflagefläche (2d) der Muffe ausgebildet sind,
und dass die besagte Muffe eine zweite Auflagefläche (2e) besitzt, auf der sich der Ring (4) verschieben kann, wobei der Ring eine schräge Rampe (4b) aufweist, die innen mit den Kugeln (3) in Kontakt steht,
und dass die um die äußere Auflagefläche (2d) der Muffe herum angebrachte Rückholfeder (5) durch ihre Enden gehalten wird, die auf der geraden inneren Schmalseite (4a), die einer Abstützrampe (4b) auf den Kugeln benachbart ist, und auf der Verbindungsschmalseite (2f) der besagten Auflageflächen (2d-2e) aufliegen.
